# EUROPEAN PATENT APPLICATION

(11) **EP 4 219 857 A1**
(43) Date of publication of application: **02.08.2023**
(21) Application number: 23167604.0
(22) Date of filing: 13.09.2021
(51) Int. Cl.: E04D 13/10, E04G 21/32, E06C 1/34, H02S 20/20, E04D 13/12

(54) **FASTENING ARRANGEMENT FOR FASTENING ROOF EQUIPMENT TO A ROOF**

(30) Priority: 14.09.2020 SE 2051071
(62) Divisional of application: 21196243.6
(71) Applicant: CWL Patent AB, 792 22 Mora (SE)
(72) Inventor: GRANSTRÖM, Linus, 792 32 Mora (SE)
(74) Representative: Ehrner & Delmar Patentbyrå AB

(57) **Abstract**

The invention relates to a fastening arrangement (100) for fastening roof equipment (200) to a roof (300), the fastening arrangement (100) comprising: a bracket (130) comprising at least one engagement means (132a, 132b,..., 132n) for engagement with a roof equipment (200); a first fastening portion (110) comprising at least one first fastening means (112) for fastening the fastening arrangement (100) to a first roof structure (310a) of a roof (300); a second fastening portion (120) comprising at least one second fastening means (122) for fastening the fastening arrangement (100) to a second roof structure (31 0b) of the roof (300); and at least one adjustment means (144) for adjusting a length (L) of the fastening arrangement (100). The invention further relates to a system comprising such a fastening arrangement (100).

## Description

### Technical Field

The invention relates to a fastening arrangement for fastening roof equipment to a roof. Furthermore, the invention also relates to a system comprising such a fastening arrangement.

### Background

Different fastening arrangements for fastening or attaching roof equipment to a roof are provided on the market. Such fastening arrangements may comprise one or more brackets for engagement with the roof equipment and one or more fastening means or fastening devices for fastening the bracket to a roof. Examples of roof equipment are ladders, snow fences, safety equipment and solar panels.

### Summary

An objective of embodiments of the invention is to provide a solution which mitigates or solves the drawbacks and problems of conventional solutions.

A further objective of embodiments of the invention is to provide a solution which makes mounting of roof equipment to a roof easier than conventional solutions.

The above and further objectives are solved by the subject matter of the independent claims. Further advantageous embodiments of the invention can be found in the dependent claims.

According to a first aspect of the invention, the above mentioned and other objectives are achieved with a fastening arrangement for fastening roof equipment to a roof, the fastening arrangement comprising:
a bracket comprising at least one engagement means for engagement with a roof equipment;
a first fastening portion comprising at least one first fastening means for fastening the fastening arrangement to a first roof structure of a roof;
a second fastening portion comprising at least one second fastening means for fastening the fastening arrangement to a second roof structure of the roof; and
at least one adjustment means for adjusting a length of the fastening arrangement.

A roof structure herein may have any of a first side facing a roof ridge, a second side facing outwards from a plane of a roof, and a third side facing a roof eave or a roof projection. The first and second sides of the roof structure may face opposite directions. The roof structures may have elongated shape/form.

An advantage of the fastening arrangement according to the first aspect is that the length of the fastening arrangement can be adjusted or varied. Thereby, the fastening arrangement can be fastened to different types of roof structures or to roof structures with different dimensions or centre distances between the construction parts. For example, the distance between battens of a roof may vary in different roof structures. Therefore, the same fastening arrangement can be used for different roof structures. Further, mounting of the fastening arrangement to roof structure and hence the roof equipment is also made easier since the length of the fastening arrangement can be adjusted to a specific roof structure design and to the design of the roof equipment.

In an embodiment of a fastening arrangement according to the first aspect, the adjustment means comprises adjustment means for adjusting the length of the fastening arrangement along a direction perpendicular to an extension of the first roof structure and an extension of the second roof structure.

This case may for example be applicable when the roof structure is a batten. The mentioned direction may also be parallel to the plane of the roof.

In an embodiment of a fastening arrangement according to the first aspect, wherein the bracket substantially extends over the second roof structure and the third roof structure in operation.

Thereby, a robust fastening arrangement design is provided.

In an embodiment of a fastening arrangement according to the first aspect, the fastening arrangement further comprises at least one attachment means for attaching the first fastening portion to the bracket and/or to the second fastening portion.

In an embodiment of a fastening arrangement according to the first aspect, the attachment means comprises attachment means for attaching the bracket to the first fastening portion and/or to the second fastening portion in an angle to a plane of the roof.

The angle may be 90 degrees and hence perpendicular to the plane of the roof but is not limited thereto. The angle is larger than 0 degrees and smaller than 180 degrees in relation to the plane of the roof which also may be denoted the surface of the roof.

In an embodiment of a fastening arrangement according to the first aspect, the bracket is configured to extend outwards in an angle to a plane of the roof in operation.

The expression "in operation" herein may be understood as how different parts are arranged and/or located in relation to each other and/or to different parts of a roof when mounted in use.

Further, the angle may be 90 degrees and hence perpendicular to the plane of the roof but is not limited thereto. The angle is however larger than 0 degrees and smaller than 180 degrees in relation to the plane of the roof which sometimes also may be denoted the surface plane of the roof.

In an embodiment of a fastening arrangement according to the first aspect, the attachment means and the adjustment means are co-located.

Thereby, a compact fastening arrangement solution is provided.

In an embodiment of a fastening arrangement according to the first aspect, the attachment means and the adjustment means together form a combined attachment and adjustment means.

Thereby, an even more compact fastening arrangement solution is provided.

In an embodiment of a fastening arrangement according to the first aspect, wherein the bracket and the second fastening portion are formed from a common structure.

Thereby, an even more robust fastening arrangement solution is provided. Further, lesser parts are need when producing the fastening arrangement.

In an embodiment of a fastening arrangement according to the first aspect, the second fastening portion comprises a supporting portion configured to support the fastening arrangement on a third roof structure of the roof in operation.

Thereby, an even more robust and secure fastening arrangement solution is provided.

In an embodiment of a fastening arrangement according to the first aspect, the second fastening portion extends between the second roof structure and the third roof structure in operation.

Thereby, an even more robust and secure fastening arrangement solution is provided.

In an embodiment of a fastening arrangement according to the first aspect, the fastening arrangement further comprises
an additional fastening portion comprising an additional fastening means for fastening the fastening arrangement to the third roof structure; and
an additional adjustment means for adjusting the length of the fastening arrangement.

Thereby, a serially coupled fastening arrangement is provided. The serially coupled fastening arrangement means a more secure and robust fastening of roof equipment to a roof. Further, flexibility in size and adaptation to different roof types and roof equipment is possible. Moreover, since the serially coupled fastening arrangement comprises additional adjustment means even more freedom for adjusting the length of the fastening arrangement is possible.

In an embodiment of a fastening arrangement according to the first aspect, the additional fastening portion extends between the third roof structure and a fourth roof structure in operation.

Thereby, an even more robust and secure fastening arrangement solution is provided.

In an embodiment of a fastening arrangement according to the first aspect, the fastening arrangement further comprises
an additional bracket comprising at least one engagement means for engagement with a roof equipment.

In an embodiment of a fastening arrangement according to the first aspect, the fastening arrangement further comprises
an additional attachment means for attaching the second fastening portion and/or the bracket to the additional fastening portion and/or the addition bracket.

In an embodiment of a fastening arrangement according to the first aspect,
the first fastening means comprises a first hook portion arranged on the tip of the first fastening portion for hooking onto the first roof structure, and/or
the second fastening means comprises a second hook portion arranged on the tip of the second fastening portion for hooking onto the second roof structure.

Thereby, even more secure and robust fastening to the roof structures of the roof is provided.

In an embodiment of a fastening arrangement according to the first aspect, the bracket comprises at least one deformation portion configured to deform at a deformation level when receiving excessive loads.

The deformation level may correspond to a load level or an excess load level applied on the bracket. Thereby, e.g. different safety systems may be used with the present fastening arrangement for improved safety.

In an embodiment of a fastening arrangement according to the first aspect, the deformation portion is arranged adjacent to the first fastening portion.

This can also be understood that the deformation portion is arranged on a section of the bracket facing and/or being closest to the ridge of the roof. Thereby, e.g. safety systems for fall protection can advantageously be coupled to the present fastening arrangement.

In an embodiment of a fastening arrangement according to the first aspect,
the first fastening means comprises a first portion for fixative means for fastening the fastening arrangement to the first roof structure, and/or
the second fastening means comprises a second portion for fixative means for fastening the fastening arrangement to the second roof structure.

Thereby, a secure and robust fastening to the roof structures of the roof is provided.

In an embodiment of a fastening arrangement according to the first aspect,
the first portion and the second portion substantially extend in a plane parallel to a plane of the roof, and
the first hook portion and the second hook portion extend in a plane perpendicular to the plane of the roof.

Thereby, even more secure and robust fastening to the roof structures of the roof is provided.

In an embodiment of a fastening arrangement according to the first aspect,
the first fastening portion has an elongated band shape; and/or
the second fastening portion has an elongated band shape.

Thereby, the fastening arrangement can be made narrow make mounting easier e.g. for roofs with specific types of roof tiles.

In an embodiment of a fastening arrangement according to the first aspect,
the first fastening portion has a first length extending in a plane parallel to a plane of the roof and a first band width extending outwards from the roof; and/or
the second fastening portion has a second length extending in a plane parallel to a plane of the roof and a second band width extending outwards from the roof.

Thereby, the fastening portions can extend between roof tiles in operation making mounting easier but also avoiding roof tiles to have a raised position when being arranged on the roof structure/roof.

In an embodiment of a fastening arrangement according to the first aspect,
the first fastening portion extends on a first tile in operation; and
the second fastening portion extends under the first tile in operation.

In an embodiment of a fastening arrangement according to the first aspect, the second fastening portion comprises a supporting means for enclosing and supporting a lower end of the first tile in operation.

In an embodiment of a fastening arrangement according to the first aspect, the supporting means is a U-shaped portion enclosing and supporting the lower end of the first tile in operation.

Thereby, an even more secure and robust fastening of roof equipment is provided. Further, the first tile will also be more securely arranged on the roof structure.

In an embodiment of a fastening arrangement according to the first aspect,
the first fastening portion extends between a side of a second tile and a side of a third tile in operation, and
the second fastening portion extends between a side of a fourth tile and a side of a fifth tile in operation.

In an embodiment of a fastening arrangement according to the first aspect, the second fastening portion comprises a supporting portion configured to support the fastening arrangement on a third roof structure of the roof in operation.

Thereby, an even more secure and robust fastening arrangement is provided.

In an embodiment of a fastening arrangement according to the first aspect,
the fastening arrangement comprises first attachment for attaching the bracket to the first fastening portion, and
the bracket and the second fastening portion are formed from a common structure.

Thereby, a very robust fastening arrangement is provided.

In an embodiment of a fastening arrangement according to the first aspect, the first roof structure, the second roof structure and the third roof structure are arranged in parallel to each other in a plane of the roof and in a descending order along the slope of the roof.

In an embodiment of a fastening arrangement according to the first aspect, the first roof structure is a first batten, the second roof structure is a second batten, the third roof structure is a third batten.

Hence, the first roof structure is arranged above the second roof structure seen along the slope of the roof and the second roof structure is arranged above the third roof structure seen along the slope of the roof. This may also be understood as that the first roof structure is arranged closer to the ridge of the roof than the second roof structure which in turn is arranged closer to the ridge of the roof than the third roof structure.

According to a second aspect of the invention, the above mentioned and other objectives are achieved with a system comprising
at least one fastening arrangement according to any one of the preceding claims; and
at least one roof equipment.

Further applications and advantages of the embodiments of the invention will be apparent from the following detailed description.

### Brief Description of the Drawings

The appended drawings are intended to clarify and explain different embodiments of the invention, in which:
- Fig. 1 shows a fastening arrangement in a side view according to an embodiment the invention;
- Fig. 2 shows the fastening arrangement in Fig. 1 in a perspective view;
- Fig. 3 shows a fastening arrangement in a side view according to a further embodiment of the invention;
- Fig. 4 shows the fastening arrangement in Fig. 3 in a perspective view;
- Fig. 5 shows the fastening arrangement in Fig. 3 in a perspective view from above;
- Fig. 6 shows the fastening arrangement in Fig. 3 in a perspective view from below;
- Fig. 7 shows an exemplary second fastening portion and bracket in a side view according to an embodiment of the invention;
- Fig. 8 shows the second fastening portion and the bracket in Fig. 7 in a perspective view;
- Fig. 9 shows a second fastening portion and a bracket according to a further embodiment of the invention;
- Fig. 10 shows the second fastening portion and the bracket in Fig. 9 in a perspective view;
- Fig. 11a - 11c show a fastening arrangement according to an embodiment of the invention;
- Fig. 12 - 14 show a system according to an embodiment of the invention comprising at least two fastening arrangement and a roof equipment; and
- Fig. 15 illustrates a house with a roof having a roof structure comprising battens arranged in parallel to each other.

### Detailed Description

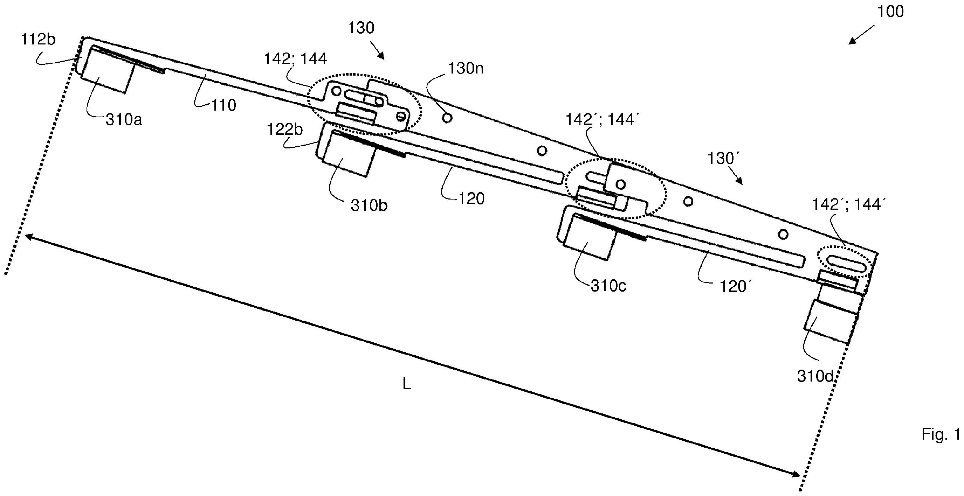

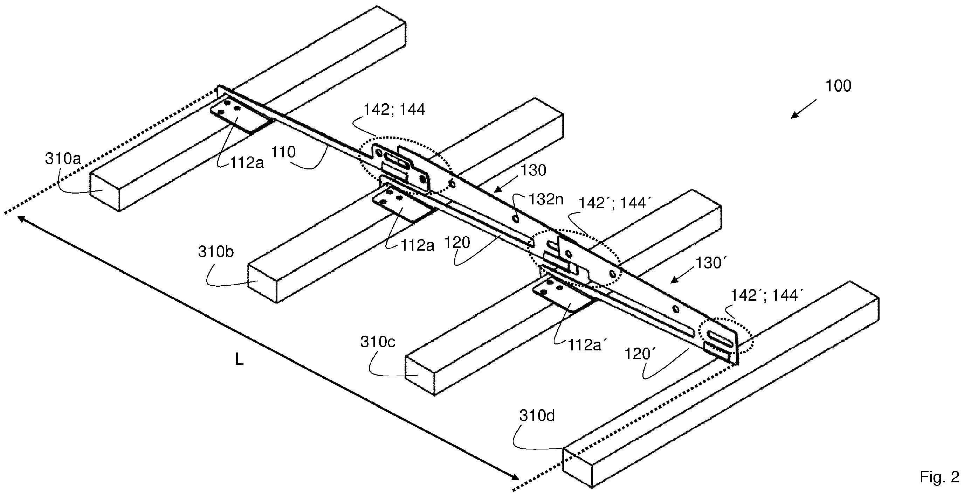

Fig. 1 and 2 show a fastening arrangement 100 according to embodiments of the invention seen in a side view and perspective view, respectively. With reference to Fig. 1 and 2, the fastening arrangement 100 comprises a bracket 130 having at least one engagement means 132n for engagement with a roof equipment 200. The engagement means 132n may engage or cooperate with corresponding engagement means of the roof equipment 200. The fastening arrangement 100 further comprises a first fastening portion 110 comprising at least one first fastening means 112 for fastening the fastening arrangement 100 to a first roof structure 310a of a roof 300. The fastening arrangement 100 further comprises a second fastening portion 120 comprising at least one second fastening means 122 for fastening the fastening arrangement 100 to a second roof structure 310b of the roof 300, wherein the second roof structure 310b is different to the first roof structure 310a. The fastening arrangement 100 further comprises at least one adjustment means 144 for adjusting a length L of the fastening arrangement 100. Thereby, the fastening arrangement 100 can be fastened to different types of roof structures or to roof structures with different dimensions or centre distances between the construction parts.

Furthermore, the fastening arrangement 100 may comprise at least one attachment means 142 for attaching the first fastening portion 110 to the bracket 130 and/or to the second fastening portion 120. In the embodiment shown in Fig. 1 and 2, the fastening arrangement 100 comprises attachment means 142 and adjustment means 144 arranged between the first fasting portion 110 and the bracket 130 for attaching the bracket 130 to the first fastening portion 110 and for adjusting the length L of the fastening arrangement 100. Therefore, the attachment means 142 and the adjustment means 144 may be co-located with each other in the fastening arrangement 100. They may in further embodiments together form a combined attachment and adjustment means for an even more compact solution. However, the fastening arrangement 100 may comprises attachment means 142 and adjustment means 144 arranged between the second fasting portion 120 and the bracket 130 for attaching the bracket 130 to the second fastening portion 120 and for adjusting the length L of the fastening arrangement 100.

The fastening arrangement 100 may in embodiments comprises any numbers and combinations of attachment means 142 and adjustment means 144 located at suitable location at the fastening arrangement 100. Hence, as disclosed in Fig. 1 and 2, the fastening arrangement 100 may include an additional fastening portion 120' comprising an additional fastening means 122' for fastening the fastening arrangement 100 to the third roof structure 310c and also include an additional adjustment means 144' for adjusting the length L of the fastening arrangement 100. By using a plurality of adjustment means even more flexibility is possible for adjusting the length of the fastening arrangement 100 and hence when mounting the fastening arrangement 100 and the roof equipment at the roof.

The general serial coupled design or structure of such fastening arrangement 100 implies that the additional fastening portion 120' extends between the third roof structure 310c and a fourth roof structure 310d in operation. The fastening arrangement 100 may also include one or more additional brackets 130' having at least one engagement means 132a, 132b,..., 132n for engagement with a roof equipment 200 thereby providing more supporting/connection points for roof equipment. This further means that the fastening arrangement 100 may comprises an additional attachment means 142' for attaching the second fastening portion 120 and/or the bracket 130 to the additional fastening portion 120' and/or the addition bracket 130'.

With the use of any number of additional parts a serially coupled fastening arrangement 100 is provided. Such a serially coupled fastening arrangement 100 can easily be adapted to different roof structures, roof types, types of roof tiles and roof equipment. Moreover, the serially coupled structure means a more robust and secure design compared to conventional solutions.

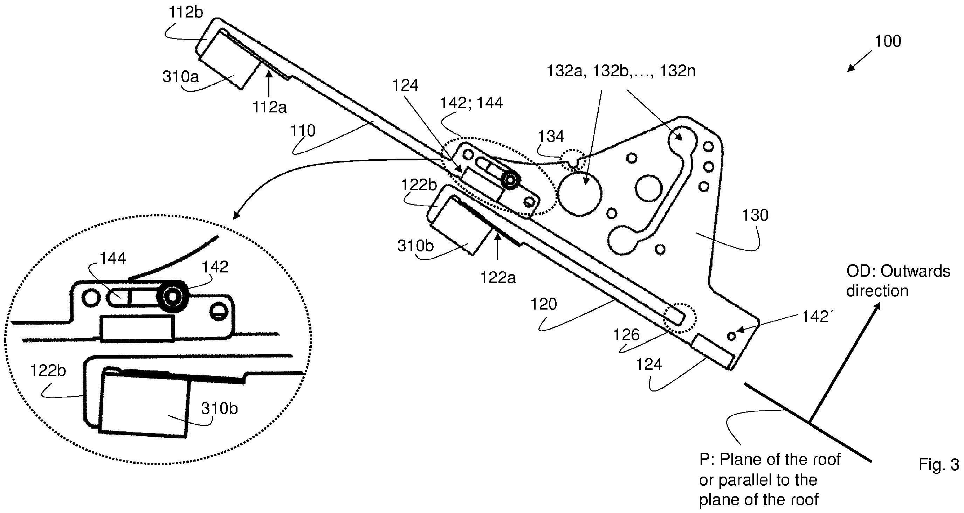

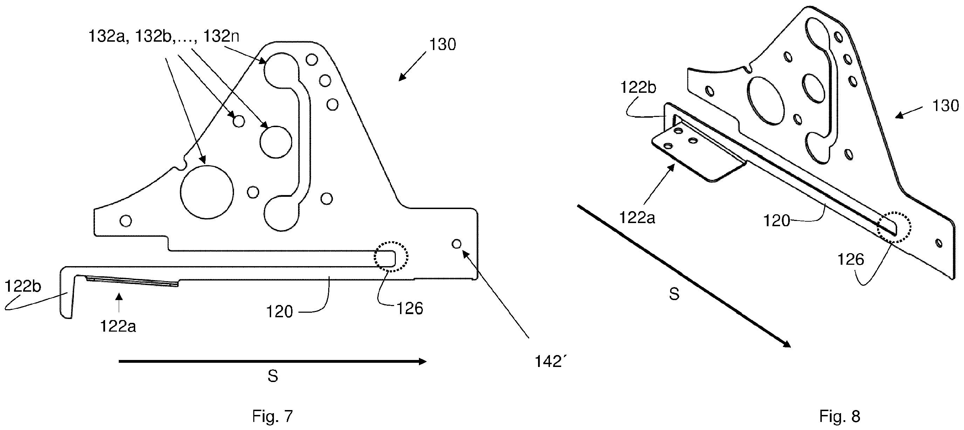

Moreover, Figs. 3-8 show a fastening arrangement 100 according to further embodiments of the invention. One difference to the embodiment shown in Fig. 1 and 2 is the design of the bracket 130. It is noted that the bracket 130 therein comprises multiple different types of engagement means 132a, 132b,..., 132n for engagement with different roof equipment. As disclosed non-limiting examples of engagement means 132a, 132b,..., 132n are circular through holes in different sizes, elongated slots and slits that may or may not be combined with circular holes. Other non-limiting examples of engagement means 132a, 132b,..., 132n may be different types of couplings and connections such as screw connections and bolt connections. Further non-limiting examples are protrusions or other protruding portions for engagement with the roof equipment. Another difference is that the bracket 130 in Figs. 3 - 8 further comprises a deformation portion 134 which will be elaborated more in the following disclosure. As also noted from the disclosed embodiments, the bracket 130 and the second fastening portion 120 may be formed from a common structure such as a common sheet metal part. The common structure may also comprise additional attachment 142' so as to attach one or more additional fastening portions to the second fastening portion 120.

As shown in the enlarged detailed view in Fig. 3, the adjustment means 144 may e.g. be an elongated slot extending along a length extension of the fastening arrangement 100 in parallel to the plane of the roof 300 and in which an attachment means 142, in this case a bolt connection, can be locked in different continuous or discrete positions in the slot. Hence, the adjustment means 144 can be configured to change the length L of the fastening arrangement by taking different continuous or discrete positions along the length extension of the fastening arrangement. Thereby, the total length L of the fastening arrangement 100 can be varied and adapted to different roof structures and roof equipment. This implies that the fastening arrangement 100 can be applied on different roof constructions in which the distance between the first and second roof structures is different. For example, roof structures comprising battens arranged in a parallel pattern, the distance such as centre distance between the battens may vary.

In embodiments of the invention, adjusting the length L of the fastening arrangement 100 comprises adjusting the length L along a direction perpendicular to an extension of the first roof structure 310a and an extension of the second roof structure 310b. This embodiment is especially suitable for roof structures comprising battens arranged in parallel to each other which may imply that the length L is adjusted in parallel to the plane of the roof 300.

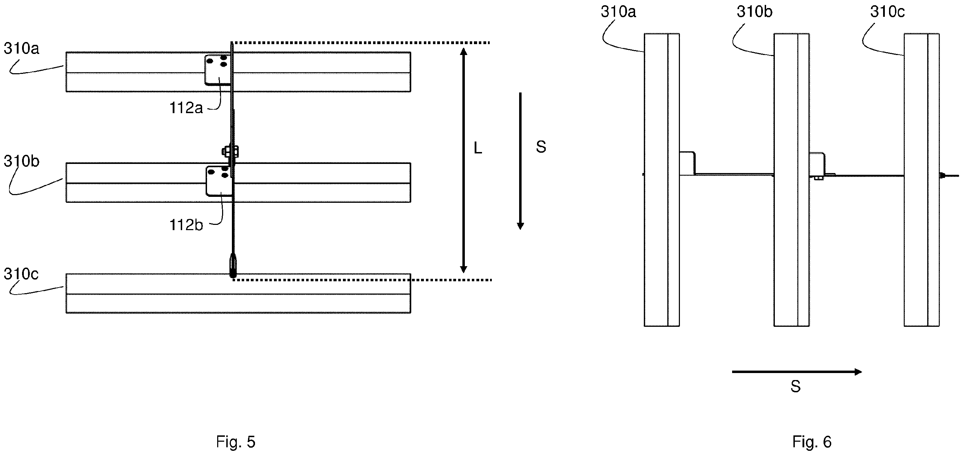

In further embodiments of the invention, the attachment means 142 comprises attachment means for attaching the bracket 130 to the first fastening portion 110 and/or to the second fastening portion 120 in an angle to a plane P of the roof 300. The angle shown in the Figs. is substantially 90 degrees which means that the bracket 130 is attached to the first fastening portion 110 and/or to the second fastening portion 120 in a plane perpendicular to the plane of the roof 300. Mentioned plane perpendicular to the plane of the roof 300 may be considered as a vertical plane extending in an outwards direction OD from the surface of the roof and the plane of the roof 300 may be denoted as a pitched roof area having a pitch or a slope having a pitch direction or a slope direction from the ridge of the roof to the eaves or roof projection. The slope direction is illustrated with an arrow S as shown in Figs. 5-8 and 15. Thereby, the bracket 130 may be configured to extend outwards in an angle to the plane of the roof 300 in operation.

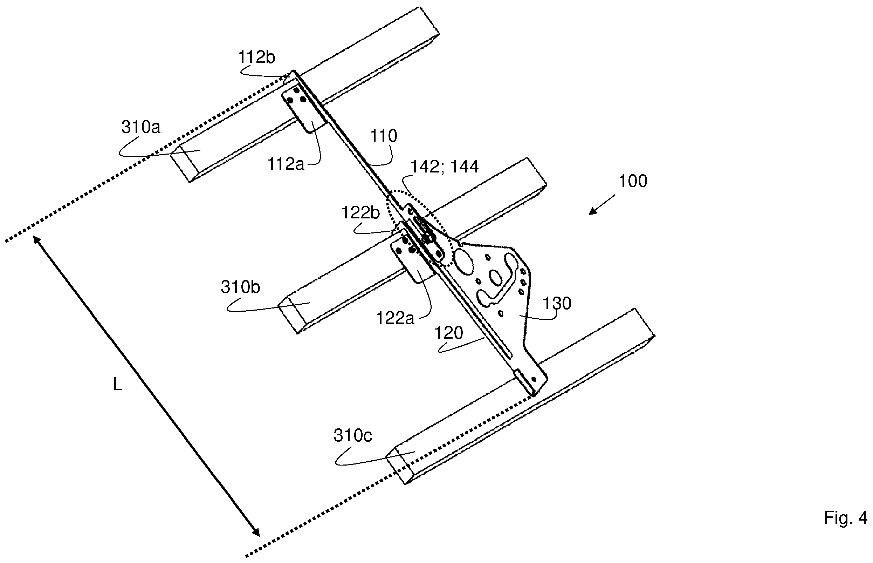

As previously mentioned, the fastening arrangement 100 comprises fastening means for fastening the fastening arrangement 100 to a roof structure. In embodiments of the invention as disclosed in Figs. 2, 4 - 5 and 9, the first fastening means 112 comprises a first portion 112a for fixative means for fastening the fastening arrangement 100 to the first roof structure 310a and/or the second fastening means 122 comprises a second portion 122a for fixative means for fastening the fastening arrangement 100 to the second roof structure 310b as shown in Figs. 4 - 5 and 7 - 10. In the examples shown such first and second portions 112a, 122a may have the shape of a plate extending from one side of the elongated fastening portion and configured to lay on a side of a batten facing outwards from the surface of the roof and comprising one or more receiving means e.g. in the form of through holes. Non-limiting examples of fixative means are screws and nails which are used for fastening the fastening arrangements 100 to the battens.

For even more secure and robust fastening, the first fastening means 112 may also comprises a first hook portion 112b arranged on the tip of the first fastening portion 110 for hooking onto the first roof structure 310a. Correspondingly, the second fastening means 122 may be or also comprise a second hook portion 122b arranged on the tip of the second fastening portion 120 for hooking onto the second roof structure 310b. These hook portions may be configured to hook around the side of the batten facing the ridge 330 of the roof 300. Therefore, also the tip of the first and second fastening portions 110, 120 is arranged at the part closest to the ridge 330. It is noted that the additional fastening portions may also have a hook portion for the same use.

In embodiments of the invention, the first portion 112a and the second portion 122a extend in a plane parallel to a plane of the roof 300, and the first hook portion 112b and the second hook portion 122b extend in a plane perpendicular to the plane of the roof 300 as shown in Fig. 4. Hence, they are perpendicularly arranged in relation to each other. In the disclosed example in Figs. 4 - 6, the hook portion is arranged around a side of a batten facing the ridge 330 whilst the first portion 112a is located on a side of the batten facing outwards from the surface of the roof 300. This solution provides an even more robust and secure anchoring of the fastening arrangement 100 to the roof structure.

In further embodiments of the invention, the second fastening portion 120 extends between the second roof structure 310b and the third roof structure 310c in operation. In this respect the second fastening portion 120 may comprise a supporting portion 124 configured to support the fastening arrangement 100 on a third roof structure 310c of the roof 300 in operation. The bracket 130 may also substantially extend over the second roof structure 310b and the third roof structure 310c in operation. The supporting portion 124 may be arranged in the part of the second fastening portion 120 closest to the eaves or roof projection in operation. The supporting portion 124 in contact with the third roof structure 310c may be covered with rubber or any other suitable material. Thus, mechanical damage on the tile is reduced and also undesired noise generated by the mechanical contact between the supporting portion 124 and the tile can be reduced. The combination of one or more of the first and second fastening means and the supporting portion 124 a very robust and secure anchoring of the fastening arrangement 100, and hence the roof equipment 200, to the roof structure of the roof 300 is achieved. It its further noted that also the first fastening portion 110 may comprise a corresponding supporting portion 124 for supporting the first fastening portion 110 on the second roof structure 310b as shown in Fig. 3.

Yet another advantage with such a secure anchoring of the roof equipment is provided for the embodiments of the invention when the bracket 130 comprises at least one deformation portion 134 configured to deform at a deformation level when receiving excessive loads. Since the fastening arrangement is so securely fastened to the roof structure there is no risk that the roof equipment will detach or disconnect from the roof 300, i.e. a very secure anchoring is provided. Hence, with the combination of very secure fastening and designed deformation portion(s) robust and safe safety applications can be designed. For example, the deformation portion(s) may be designed for different load levels and hence for different safety applications with different load level requirements for deformation. Such different load levels may e.g. be designed based on the number of deformation portions arranged on the bracket, the size and location of each deformation portion, the thickness of the bracket 130, and so on.

Generally, the deformation portion 134 of the bracket 130 may be designed to deform when being impacted by excessive load levels corresponding to threshold levels. Such load threshold levels may conform to regulatory requirements e.g. stipulated by government authorities and/or to standard requirements in the industry. Different designs of deformation portions are possible. A non-limiting example is the disclosed deformation portion 134 which is a cut out having an open portion facing the roof ridge in operation. The deformation portion 134 allows deformation and tearing apart at loads exceeding predetermined threshold values e.g. for the purpose of preventing inelastic pull from a falling person having a life-line fastened in a roof equipment such as a rack pipe or a holding profile. In further embodiments of the invention, the deformation portion 134 is arranged adjacent to the first fastening portion 110 as shown in Fig. 3 and 4. In other words the deformation portion 134 is arranged in the portion of the bracket 130 facing or being closest to the ridge of the roof 300 in operation. This is especially suitable for safety equipment for fall accidents since the force of gravity is generally the acting force in such cases.

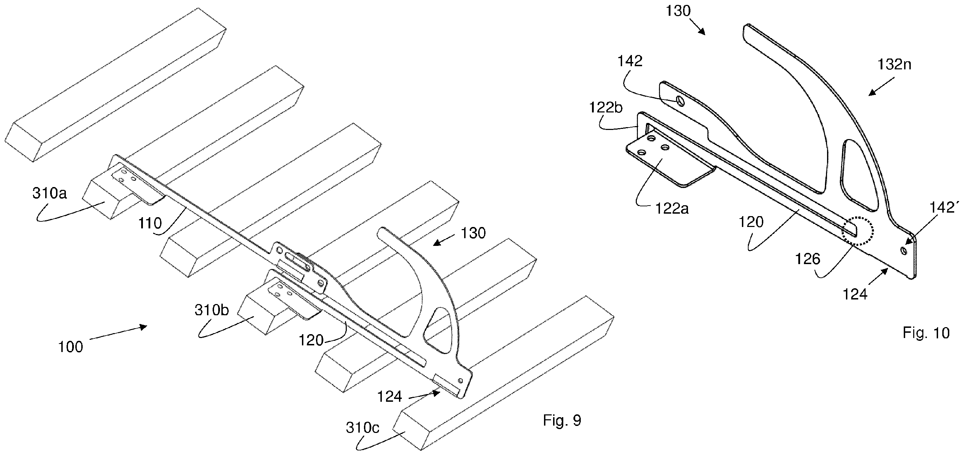

Fig. 9 and 10 show a further bracket design according to embodiments of the invention. The bracket 130 therein comprises further types of engagement means 132n in the form of hooks for engagement with roof equipment 200 and in this particular case for engaging with a roof ladder or stair. It is also noted from Fig. 9 that the first 310a and second roof 310b structures to which the first 110 and second 120 fastening portions are fastened do not have to be adjacent roof structures, such as adjacent battens. Fig. 9 shows the example of every other batten. Certainly, it could be every third or every fourth batten, etc. Also, non-regular patterns of battens, e.g. even and/or non-even, made be used for fastening the first 110 and second 120 fastening portions to the roof structure construction.

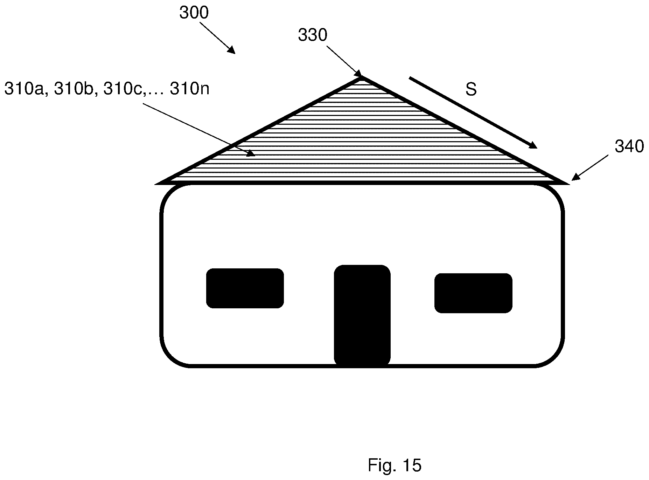

Moreover, many different types of roof tiles for covering roofs are provided on the market. The tiles may have different dimensions and shapes and may be produced from many different materials. The roof tiles are often arranged upon a roof structure in a given pattern. The roof structure often comprises battens extending in horizontal lines and being arranged in parallel to each other seen from the ridge of the roof to the eaves or roof projection as shown in Fig. 15. The battens on which the tiles are supported may be arranged on a construction of counter battens which however is not shown in the Figs.

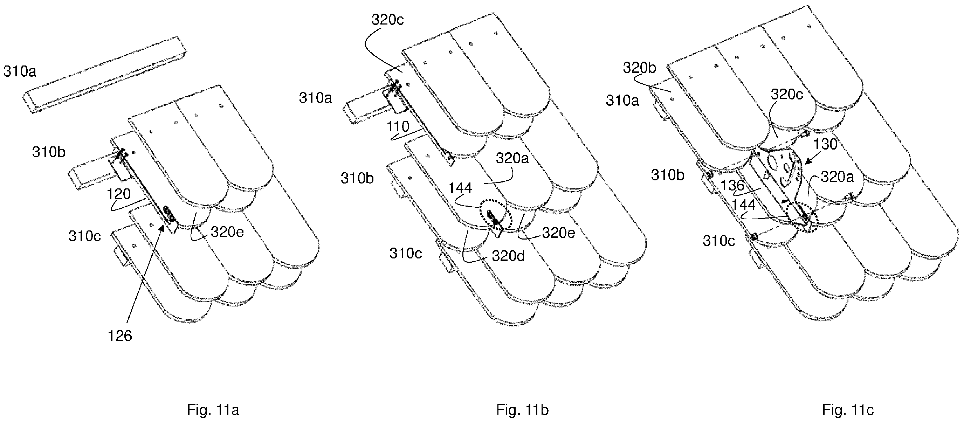

One type of roof tiles is so called Bieber roof tiles which is shown in Figs. 11a - 11c. A drawback with such roof tiles is that it may be difficult to mount roof equipment on roofs covered by such tiles due to their shape and the laying pattern prescribed for such tiles. Often one or more of such roof tiles will be arranged in a deviated position, e.g. slightly raised position, when mounting roof equipment which means reduced protection of the roof and a risk of tiles detaching from the roof structure, e.g. under windy or stormy conditions.

Therefore, in embodiments of the invention the first fastening portion 110 has an elongated band shape and/or the second fastening portion 120 has an elongated band shape. The bands extend along the surface of the roof 300 in a raised position extending outwards from the surface of the roof 300 which implies a very narrow build in the plane of the roof 300. More specifically, in embodiments of the invention the first fastening portion 110 has a first length extending in a plane parallel to a plane of the roof 300 and a first band width extending outwards from the roof 300, and/or the second fastening portion 120 has a second length extending in a plane parallel to a plane of the roof 300 and a second band width extending outwards from the roof 300. The length is larger than the width, e.g. more than two times the width. Further, the thickness of the bands is less than the width of the bands hence the term band used herein.

Fig. 11a - 11c shows an embodiment of the present fastening arrangement 100 comprising two attachment means and one adjustment means 144. A first attachment means 142 is configured to attach the bracket 130 to the first fastening portion 110 and a second attachment means and adjustment means is configured to attach the bracket 130 to the second fastening portion 120. As disclosed in the embodiments illustrated in Fig. 11a - 11c, the first fastening portion 110 extends on a first tile 320a in operation and the second fastening portion 120 extends under the first tile 320a in operation. In such cases the second fastening portion 120 may comprise a U-shaped portion 126 extending around and holding a lower end of the first tile 320a in operation as shown in Figs. 11a - 11c. The U-shaped portion 126 may be arranged adjacent to the supporting portion 124 and facing the opposite direction to the slope S of the roof 300 in embodiments of the invention. As further disclosed in Fig. 11a - 11c the first fastening portion 110 extends between a side of a second tile 320b and a side of a third tile 320c in operation, and the second fastening portion 120 extends between a side of a fourth tile 320d and a side of a fifth tile 320e in operation. Further, the second fastening portion 120 extends between a side of a fourth tile 320d and a side of a fifth tile 320e in operation This is due to the band shape of the first and second fastening portions.

In Fig. 11a, a second fastening portion 120 is attached to a second batten 310b by using screws. In Fig. 11b, a first tile 320a is arranged on the second fastening portion 120 and the end of the first tile 320a is fitted into a U-shaped portion 126. A first fastening portion 110 is attached to a first batten 310a by using screws and the first fastening portion 110 extends above the first tile 320a in operation. It is further noted from Fig. 11b that the second fastening portion 120 extends between a side of a fourth tile 320d and a side of a fifth tile 320e in operation. In Fig. 11c, a bracket 130 is attached to the first fastening portion 110 and the second fastening portion 120, respectively, e.g. by using bolt connections. The bracket 130 extends outwards from the plane of the roof 300 and comprises engagement means for engagement with corresponding engagement means of a roof equipment 200. The bracket 130 may also comprise a supporting portion 136 as shown in Fig. 11c. The supporting portion may be a plate perpendicular to the outwards extension of the bracket 130 and configured to be supported by a tile in operation, e.g. the first tile 320a.

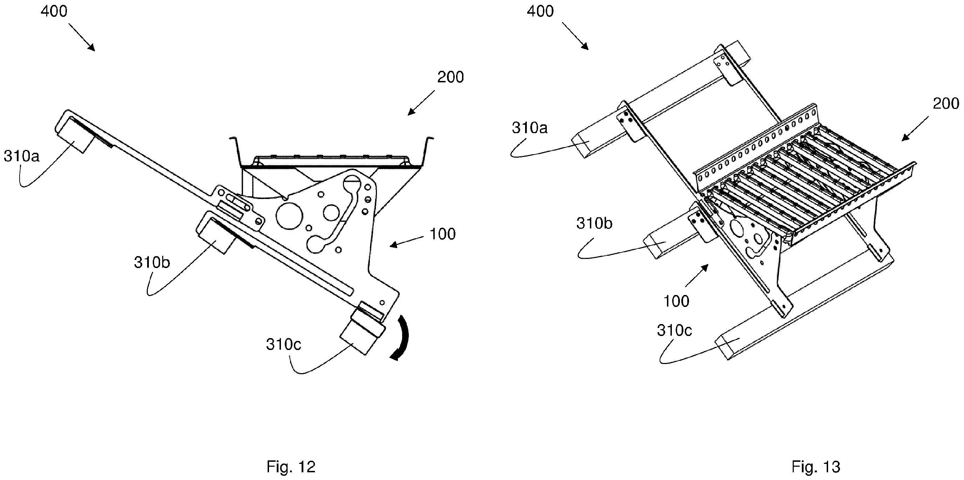

Figs. 12 - 14 shows examples of different systems 400 according to embodiments of the invention. Such a system 400 comprises at least one fastening arrangement 100 according to embodiments of the invention and at least one roof equipment 200. By coupling any number of brackets 130 and first 110 and second 120 fastening portions as disclosed herein a system 400 can be formed.

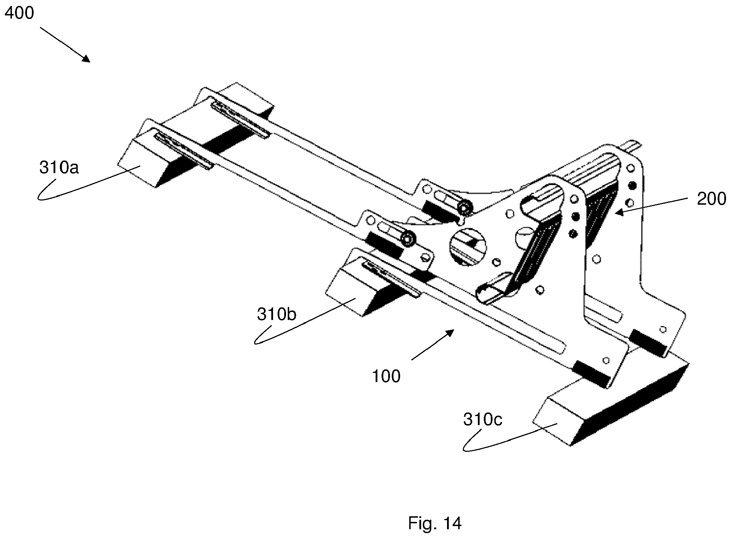

In the disclosed non-limiting example, the roof equipment 200 in Fig. 12 and 13 is a walkway. However, only a section of the walkway is shown. In Fig. 14 the roof equipment 200 is a snow fence. Non-limiting further examples of roof equipment are roof ladders, ridge and roof rails, hatches, guardrails, fall protection and safety devices, snow stoppers, roof steps, solar panels, etc.

The fastening arrangement 100 may be produced from sheet metal parts bent in suitable shapes. Hence, sheet metal may be punched in different shapes and thereafter bent or folded for producing the different parts of the fastening arrangement 100 and the system 400 according to embodiments of the invention.

Finally, it should be understood that the invention is not limited to the embodiments described above, but also relates to and incorporates all embodiments within the scope of the appended independent claims.

## Claims

1. A fastening arrangement (100) for fastening roof equipment (200) to a roof (300), the fastening arrangement (100) comprising:
a fastening portion (110, 120) comprising at least one fastening means (112, 122) for fastening the fastening arrangement (100) to a roof structure (310) of a roof (300), the fastening portion (110, 120) having an elongated band shape, wherein the fastening portion (110, 120) extends along the surface of the roof (300) in a raised position extending outwards from the surface of the roof (300) between two adjacent tiles (320) of the roof (300), in operation.

2. The fastening arrangement (100) according to claim 1, wherein the fastening portion (110, 120) has a length extending in a plane parallel to a plane of the roof (300) and a band width extending outwards from the roof (300), the length being larger than the width.

3. The fastening arrangement (100) according to claim 1 or 2, wherein the fastening means (112, 122) comprises a portion (112a, 122a) for fastening the fastening arrangement (100) to the roof structure (310), the portion (112a, 122a) being plate shaped and extending from one side of the fastening portion (110, 120).

4. The fastening arrangement (100) according to claim 3, wherein the portion (112a, 122a) substantially extends in a plane parallel to a plane of the roof (300), in operation.

5. The fastening arrangement (100) according to claim 3 or 4, wherein the portion (112a, 122a) is configured to lay on a side of a batten facing outwards from the surface of the roof (300).

6. The fastening arrangement (100) according to any one of claim 3 to 5, wherein the portion (112a, 122a) comprises one or more through holes.

7. The fastening arrangement (100) according to any one of claims 1 to 6, wherein the fastening means (112, 122) comprises a hook portion (112b, 122b) arranged on a tip of the fastening portion (110, 120) for hooking onto the roof structure (310), the tip of the fastening portion (110, 120) being arranged at a part of the fastening portion (110, 120) closest to a ridge (330) of the roof (300), in operation.

8. The fastening arrangement (100) according to claim 7, wherein the hook portion (112b, 122b) is arranged to hook around a side surface of a batten facing a ridge (330) of the roof (300).

9. The fastening arrangement (100) according to claim 7 or 8, wherein the hook portion (112b, 122b) extends in a plane perpendicular to a plane of the roof (300), in operation.

10. The fastening arrangement (100) according to any one of the preceding claims, wherein a portion (112a, 122a) of the fastening means (112, 122) is arranged adjacent to a hook portion (112b, 122b) of the fastening means (112, 122).

11. The fastening arrangement (100) according to any one of the preceding claims, wherein the fastening arrangement (100) further comprises an adjustment means (144) for adjusting a length (L) of the fastening arrangement (100) and/or an attachment means (142) for attaching the fastening portion (110, 120) to a bracket (130) comprising at least one engagement means (132a, 132b,..., 132n) for engagement with a roof equipment (200).

12. The fastening arrangement (100) according to 11, wherein the attachment means (142) and the adjustment means (144) are co-located and/or together form a combined attachment and adjustment means.

13. The fastening arrangement (100) according to claim 11 or 12, wherein the attachment means (142) and/or the adjustment means (144) are located at an end of the fastening portion (110, 120), the end of the fastening portion (110, 120) extending further outwards from the surface of the roof (300) than the rest of the fastening portion (110, 120).

14. The fastening arrangement (100) according to any one of claims 1 to 10, wherein the fastening portion (120) comprises a bracket (130) comprising at least one engagement means (132a, 132b,..., 132n) for engagement with a roof equipment (200), the fastening portion (120) and the bracket (130) being formed from a common structure.

15. The fastening arrangement (100) according to any one of the preceding claims, wherein the fastening portion (110, 120) is fixedly secured to the roof structure (310) of the roof (300) in operation.
